# EUROPEAN PATENT SPECIFICATION

(11) **EP 2 795 208 B1**
(45) Date of publication and mention of the grant of the patent: **24.10.2018**
(21) Application number: 12808583.4
(22) Date of filing: 03.12.2012
(51) Int. Cl.: F25B 27/02, B60P 3/20, B60H 1/32, F01N 5/02, F25D 11/00

(54) **POWER SUPPLY SYSTEM FOR TRANSPORT REFRIGERATION SYSTEM**
STROMVERSORGUNGSSYSTEM FÜR EIN TRANSPORTKÜHLSYSTEM
SYSTÈME D'ALIMENTATION POUR SYSTÈME DE RÉFRIGÉRATION DE TRANSPORT

(30) Priority: 19.12.2011 US 201161577297 P
(43) Date of publication of application: 29.10.2014
(73) Proprietor: Carrier Corporation, Farmington, CT 06034 (US)
(72) Inventor: STELLE, John T., Marcellus, NY 13108 (US)
(74) Representative: Schmitt-Nilson Schraud Waibel Wohlfrom Patentanwälte Partnerschaft mbB
(86) International application number: PCT/US2012/067513
(87) International publication number: WO 2013/095895

(56) References cited:
- WO-A1-2010/112958
- WO-A2-2008/037980
- DE-A1-102010 022 993
- KR-A- 20070 056 373
- US-B1- 6 223 546

## Description

### Field of the Invention

This invention relates generally to transport refrigeration systems for refrigerating perishable cargo during transit and, more particularly, to on-board power supply systems for providing electrical power to various components of the transport refrigeration unit.

### Background of the Invention

Refrigerated trucks and trailers are commonly used to transport perishable cargo, such as, for example, produce, meat, poultry, fish, dairy products, cut flowers, and other fresh or frozen perishable products stowed in a temperature-controlled space, commonly referred to as the cargo box, within the truck or trailer. In the case of refrigerated trucks, a transport refrigeration system is mounted to the truck, typically behind the truck or on the roof of the truck, for maintaining a controlled temperature environment within the cargo box of the truck. In the case of refrigerated trailers, which are typically pulled behind a tractor cab, a transport refrigeration system is mounted to the trailer, typically to the front wall of the trailer, for maintaining a controlled temperature environment within the cargo box of the trailer.

Conventionally, transport refrigeration systems used in connection with refrigerated trucks and refrigerated trailers include a transport refrigeration unit having a refrigerant compressor, a condenser with one or more associated condenser fans, an expansion device, and an evaporator with one or more associated evaporator fans, which are connected via appropriate refrigerant lines in a closed refrigerant flow circuit. Air or an air/gas mixture is drawn from the interior volume of the cargo box by the evaporator fan(s) associated with the evaporator, passed through the airside of the evaporator in heat exchange relationship with refrigerant whereby the refrigerant absorbs heat from the air, thereby cooling the air. The cooled air is then supplied back to the cargo box.

On commercially available transport refrigeration systems used in connection with refrigerated trucks and refrigerated trailers, the compressor, and typically other components of the transport refrigeration unit, must be powered during transit by a prime mover. In the case of refrigerated trailers, the prime mover typically comprises a diesel engine carried on and considered part of the transport refrigeration system. In mechanically driven transport refrigeration systems the compressor is directly driven by the diesel engine, either through a direct mechanical coupling or a belt drive, and other components, such as the condenser fan(s) and evaporator fan(s) are belt driven. A low voltage unit battery may also be provided to power electronic equipment, such as a system controller and other control system components, as well as lighting associated with the transport refrigeration system. An alternator, belt driven off the diesel engine, is typically provided for charging the low voltage unit battery.

An all electric transport refrigeration system for refrigerated trailer application is also commercially available through Carrier Corporation headquartered in Farmington, Connecticut, USA. In the all electric transport refrigeration system, a prime mover, most commonly a diesel engine, carried on and considered part of the transport refrigeration system, drives an AC synchronous generator that generates AC power. The generated AC power is used to power an electric compressor motor for driving the refrigerant compressor of the transport refrigeration unit and also powering electric AC fan motors for driving the condenser and evaporator motors and electric heaters associated with the evaporator. For example, U.S. Pat. No. 6,223,546 discloses an all electric transport refrigeration system. A low voltage unit battery may also be provided to power electronic equipment, such as a system controller and other control system components, as well as lighting associated with the transport refrigeration system.

In conventional practice, a transport refrigeration unit installed on a refrigerated truck or trailer operates in one of a temperature pulldown mode, a temperature maintenance mode, or a standstill mode. In the temperature pulldown mode, the refrigerant compressor, the condenser fan(s) and the evaporator fan(s) are operating with the refrigerant compressor generally operating at full capacity to lower the temperature within the cargo space as rapidly as possible to a desired set point temperature appropriate for the particular cargo stowed in the cargo space. In the temperature maintenance mode, the refrigerant compressor, the condenser fan(s) and the evaporator fan(s) are still operating, but the refrigerant compressor is operating at a significantly lower capacity so as to maintain the temperature in the cargo space within a specified range of the desired set point temperature and avoid over cooling. In the temperature maintenance mode, heaters associated with the evaporator may also be activated as necessary to warm the air passed through the evaporators by the evaporator fan(s) to prevent over cooling. In the standstill mode, the refrigerant compressor and the condenser and evaporator fans are off.

Diesel engines used as prime movers on transport refrigeration systems generally have two operating speeds, that is a high RPM speed, such as 2200 RPM, and a low RPM speed, such as 1400 RPM. In operation, the diesel engine is operated at high speed during temperature pulldown and other heavy refrigeration load conditions and at low speed during the temperature maintenance mode. During standstill, the diesel engine is typically idling at low speed. The diesel engine is generally designed to meet the power needs of the transport refrigeration unit during operation at maximum capacity, such as during the temperature pulldown mode, with efficient fuel consumption. Therefore, during the temperature maintenance mode and standstill mode, the diesel engine is operating at lower efficiency and with increased fuel consumption.

### Summary of the Invention

It would be desirable to reduce the shaft horsepower demand on the engine during operation of the transport refrigeration unit under maximum refrigeration hold conditions.

A transport refrigeration system is provided according to independent claim 1.

A method is also provided for augmenting power generation of a power supply system of a transport refrigeration in accordance with independent method claim 12.

US 6 223 546 B1 shows a transport refrigeration unit of the type configured to be mounted on the front wall of a transport trailer, the transport trailer being adapted to be connected to and towed by a motorized tractor, the transport refrigeration unit comprising a compressor having a discharge port and a suction port and further having an electric compressor drive motor hermetically disposed therein for running the compressor, a condenser heat exchanger unit operatively coupled to said compressor discharge port, an evaporator heat exchanger unit operatively coupled to said compressor suction port, at least one fan assembly having at least one electric fan motor configured to provide air flow over one of said heat exchanger units and an integrally mounted unitary engine driven generator assembly configured to selectively produce at least one A.C. voltage at one or more frequencies, wherein said generator assembly is configured to produce sufficient electric power to operate said compressor drive motor and said at least one fan motor.

WO 2010/112958 A1 shows an internal combustion engine arrangement comprising an exhaust line capable of collecting exhaust gas from the internal combustion engine, said exhaust line including a particulate filter, active regenerating means capable of generating heat during a regeneration period so as to promote oxidation of the particles retained in said filter, a thermoelectric device capable of producing electricity by Seebeck effect by the conversion of a heat flux between the hot exhaust gases flowing in the exhaust line and a cold source, said thermoelectric device being located downstream from said filter.

### Brief Description of the Drawings

For a further understanding of the disclosure, reference will be made to the following detailed description which is to be read in connection with the accompanying drawing, where:
FIG. 1 is a schematic illustration of an embodiment of a mechanically driven transport refrigeration system equipped with a power supply system having a thermoelectric generator in accordance with the disclosure; and
FIG. 2 is a schematic illustration of an embodiment of an all electric transport refrigeration system equipped with a power supply system having a thermoelectric generator in accordance with the disclosure.

### Detailed Description of the Invention

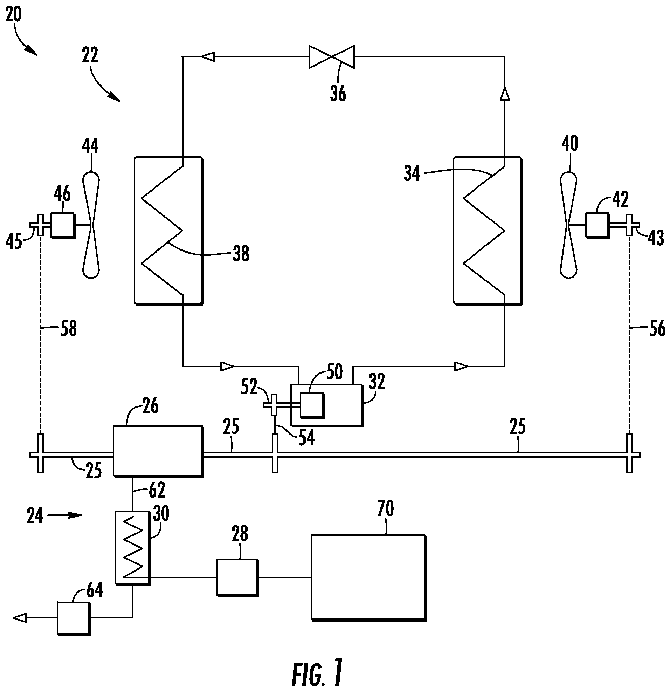

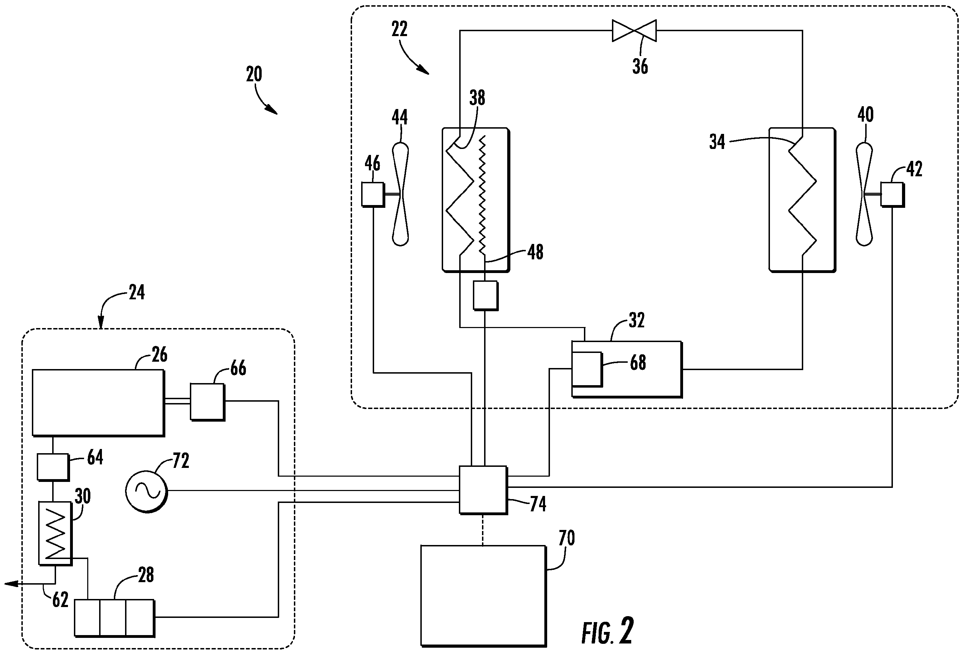

The transport refrigeration systems 20 depicted in FIGs. 1 and 2 include a refrigeration unit 22, an onboard power supply system 24 that includes a fossil-fueled engine 26, typically a diesel engine, a storage battery 28 and a thermoelectric generator 30, and a controller 70. The refrigeration unit 22 functions, under the control of the controller 70, to establish and regulate a desired product storage temperature within a refrigerated cargo space wherein a perishable product is stored during transport and to maintain the product storage temperature within a specified temperature range. The refrigerated cargo space may be the cargo box of a trailer, a truck, or an intermodal container wherein perishable cargo, such as, for example, produce, meat, poultry, fish, dairy products, cut flowers, and other fresh or frozen perishable cargo, is stowed for transport.

The transport refrigeration unit 22 includes a refrigerant compression device 32, a refrigerant heat rejection heat exchanger 34, an expansion device 36, and a refrigerant heat absorption heat exchanger 38 connected in refrigerant flow communication in a closed loop refrigerant circuit and arranged in a conventional refrigeration cycle. The refrigeration unit 22 also includes one or more fans 40 associated with the refrigerant heat rejection heat exchanger 34 and driven by fan motor(s) 42 mounted to shaft(s) 43, and one or more fans 44 associated with the refrigerant heat absorption heat exchanger 38 and driven by fan motor(s) 46 mounted to shaft(s) 45. The refrigeration unit 22 may also include an electric resistance heater 48 associated with the refrigerant heat absorption heat exchanger 38. It is to be understood that other components (not shown) may be incorporated into the refrigerant circuit as desired, including for example, but not limited to, a suction modulation valve, a receiver, a filter/dryer, an economizer circuit.

The refrigerant heat rejection heat exchanger 34 may, for example, comprise one or more refrigerant conveying coiled tubes or one or more tube banks formed of a plurality of refrigerant conveying tubes extending between respective inlet and outlet manifolds. The fan(s) 40 are operative to pass a cooling fluid, typically ambient air, across the tubes of the refrigerant heat rejection heat exchanger 34 to cool refrigerant vapor passing through the tubes. The refrigerant heat rejection heat exchanger 34 may operate either as a refrigerant condenser, such as if the refrigeration unit 22 is operating in a subcritical refrigerant cycle or as a refrigerant gas cooler, such as if the refrigeration unit 22 is operating in a transcritical cycle.

The refrigerant heat absorption heat exchanger 38 may, for example, also comprise one or more refrigerant conveying coiled tubes or one or more tube banks formed of a plurality of refrigerant conveying tubes extending between respective inlet and outlet manifolds. The fan(s) 44 are operative to pass air drawn from the temperature controlled cargo box across the tubes of the refrigerant heat absorption heat exchanger 38 to heat and evaporate refrigerant liquid passing through the tubes and cool the air. The air cooled in traversing the refrigerant heat rejection heat exchanger 38 is supplied back to the temperature controlled cargo box. It is to be understood that the term "air" when used herein with reference to the atmosphere within the cargo box includes mixtures of air with other gases, such as for example, but not limited to, nitrogen or carbon dioxide, sometimes introduced into a refrigerated cargo box for transport of perishable produce.

The refrigerant compression device 32 may comprise a single-stage or multiple-stage compressor such as, for example, a reciprocating compressor or a scroll compressor. The compression device 32 includes a compression mechanism 50 that includes a shaft 52 and is configured upon rotation of the shaft 52 to compress refrigerant vapor from a suction pressure to a discharge pressure. The controller 70 controls operation of the compression device 32 in a manner known in the art. When a refrigeration demand exists, such as for example to pulldown the temperature within the cargo space to establish a desired product storage temperature or to maintain the temperature within the cargo space within a specified tolerance of the desired temperature, the controller 70 activates the refrigerant compression device to compress refrigerant vapor from a suction pressure to a discharge pressure and circulate the refrigerant through the refrigerant circuit.

Referring now to FIG. 1, in a mechanically driven transport refrigeration system such as depicted therein, the shaft of the compression device 32 is directly driven by the engine 26 either through a direct mechanical coupling of the shaft 52 of the compression mechanism 50 to a drive shaft 25 of the engine, or through a belt drive linkage 54, as illustrated in FIG. 1, for transmitting torque from the engine shaft 25 to the shaft 52 of the compression mechanism 50 of the compression device 32. In the mechanically driven transport refrigeration system depicted in FIG. 1, the shaft 43 of the fan motor 42 operatively associated with the condenser/gas cooler fan 40 is mechanically coupled to and driven by the engine shaft 25 through a belt drive linkage 56, and the shaft 45 of the fan motor 46 operatively associated with the evaporator fan 44 is mechanically coupled to and driven by the engine shaft 25 through a belt drive linkage 58. The term "belt drive linkage" is to be understood to include not only belt drive linkages per se, but also chain drive linkages and other equivalent mechanical torque transmitting devices.

The storage battery 28 of the power supply system 24 of the mechanically driven transport refrigeration system depicted in FIG. 1 serves as a supply of electrical current for powering the controller 70, as well as associated control valves, and even lighting, particularly when the diesel engine 26 is not operating. In conventional mechanically driven systems, an alternator may be provided for generating electrical current whenever the diesel engine 26 was in operation. The shaft of the alternator is mechanically coupled to and driven by the engine shaft through a belt drive linkage. The electrical current generated by the alternator is supplied to the storage battery for charging the storage battery. Being driven by the shaft of the diesel engine, the alternator imposes a shaft horsepower drain on the diesel engine.

In the mechanically driven transport refrigeration system 20 disclosed herein and depicted in FIG. 1, a thermoelectric generator 30 is provided for converting waste heat in the exhaust gas from the diesel engine to electric current. The thermoelectric generator 30 is operatively disposed in the exhaust gas flow path 62 from the diesel engine 26 and connected in electrical communication with the storage battery 28. When the diesel engine is operating, the thermoelectric generator is exposed to the hot exhaust gas flow, typically having a temperature in the range of about 600°F to about 1000°F (about 315°C to about 538°C), passing through the exhaust gas flow path and converts heat drawn from the hot exhaust gas flow into electric current. The generated electric current may be supplied to the storage battery 28, thereby eliminating the need for the alternator associated with conventional mechanically driven transport refrigeration systems.

The specific type of thermoelectric generator 30 employed is not controlling and it is contemplated that various types of currently commercially available thermoelectric generators, as well as thermoelectric generators to be developed, may be utilized. The thermoelectric generator 30 does not impose any shaft horsepower drain on the diesel engine 26. As a result, up to about 1.5 Kilowatts (about 2.0 horsepower) of engine shaft power that would be consumed by an alternator can instead be used to meet refrigeration demand, particularly during temperature pulldown or other high cooling demand conditions.

Referring now to FIG. 2, in the all electrically driven transport refrigeration system 20 depicted therein, the compression device 32 is driven by an electric motor 68. In an embodiment, the compressor motor 68 may be disposed internally within the compression device 32 with a drive shaft interconnected with a shaft of the compression mechanism, all sealed within a common housing of the compression device 32. Additionally, in the all electric embodiment of the transport refrigeration system 20, both the drive motor 42 for the fan 40 associated with the refrigerant heat rejection heat exchanger (condenser/gas cooler) 34 and the drive motor 46 for the fan 44 associated with the refrigerant heat absorption heat exchanger (evaporator) 38 are electric motors. In the depicted embodiment, an electric resistance heater 48 may be selectively operated by the controller 70 in response to a sensed control temperature within the temperature controlled cargo box dropping below a preset lower temperature limit, which may occur in a cold ambient environment. In such an event the controller 70 activates the electric resistance heater 48 to heat air circulated over the electric resistance heater by the fan(s) 44 associated with the refrigerant heat absorption heat exchanger (evaporator) 38. The controller 70 may also selectively operate the electric resistance heater 48 when it is desired to defrost the refrigerant heat absorption heat exchanger (evaporator) 38.

The power supply system 24 for the all electric transport refrigeration system 20 disclosed herein includes an electric generator 66 driven by the diesel engine 26, a storage battery 28 and a thermoelectric generator 30. Optionally, the transport refrigeration system 20 may be provided with a connection 72 adapted to connect to an electric power grid for supplying grid electric power to the transport refrigeration unit 22 during periods when the truck, trailer or container is parked, for example at an overnight truck stop or at a warehouse. In an all electric transport refrigeration system, all of the power load demands, including but not limited to the compressor motor 68, the fan drive motors 42 and 46, and the electric resistance heater 48, of the transport refrigeration unit 22 may be powered exclusively by electric power distributed through power distribution bus 74 under command of the controller 70 and supplied onboard by the electric generator 66 and the high-voltage battery 28.

The diesel engine 26 drives the electric generator 66 that generates electrical power. The drive shaft of the diesel engine 26 drives the shaft of the electric generator 66. In an embodiment, the electric generator 66 comprises an alternating current synchronous generator for generating alternating current (AC) power. As some of the power load demands may be direct current (DC) loads as opposed to alternating current (AC) loads, for example the fan motors 42 and 46, various AC to DC converters (not shown) may be provided as necessary. The storage battery 28 of the all electric transport refrigeration system 20 may include a high voltage pack and a low voltage power pack.

The controller 70 is configured to distribute electric power to each of the power demands loads of the refrigeration unit 22, and to do so selectively from one or more of the power sources. For example, when the diesel engine 26 is operating, the controller 70 may supply electric power from the electric generator 66 not only to the compressor motor 68, but also to the fan motors 42, 46 and, when appropriate, to the electric resistance heater 48. When the diesel engine 26 is not operating, the controller 70 may supply electric power from the high voltage pack of the storage battery 28 for supplying high voltage electric power to the fan motors 42, 46 and the electric resistance heater 48, and also electric power to the controller 70 from the low voltage power pack of the storage battery 28.

In the all electric transport refrigeration system disclosed herein, the thermoelectric generator 30 is utilized to convert waste heat in the exhaust gas from the diesel engine to electric current. The thermoelectric generator 30 is operatively disposed in the exhaust gas flow path 62 from the diesel engine 26 and connected in electrical communication with the storage battery 28. When the diesel engine is operating, the thermoelectric generator is exposed to the hot exhaust gas flow, typically having a temperature in the range of about 600°F to about 1000°F (about 315°C to about 538°C), passing through the exhaust gas flow path and converts heat drawn from the hot exhaust gas flow into electric current that is supplied to the storage battery 28.

As in the case of the mechanically driven transport refrigeration system disclosed herein, the specific type of thermoelectric generator 30 employed is not controlling and it is contemplated that various types of currently commercially available thermoelectric generators, as well as thermoelectric generators to be developed, may be utilized. The thermoelectric generator 30 does not impose any shaft horsepower drain on the diesel engine 26. As a result, up to about 1.5 Kilowatts (about 2.0 horsepower) of engine shaft power that would be consumed by an alternator can instead be used to meet refrigeration demand, particularly during temperature pulldown or other high cooling demand conditions.

Synergistically, in the process of converting waste heat in the engine exhaust gas flow to electric current, the engine exhaust gas flow is further cooled, for example by as much as 100- 200°F (55.5-111°C) before being vented to the atmosphere. Positioning the particulate filter 64 in the exhaust gas flow path 62 downstream of the thermoelectric generator 30, such as depicted in FIG. 1, would allow for the use of a less expensive particulate filter 64 to be employed due to the lower gas temperatures in the exhaust gas flow path downstream of the thermoelectric generator 30. However, the particulate filter 64 may also be positioned in the exhaust gas flow path 62 upstream of the thermoelectric generator 30, such as depicted in FIG. 2, to improve the efficiency of particulate removal due to the higher exhaust gas temperatures upstream of the thermoelectric generator 30, provided the particulate filet 64 is composed of material capable of exposure to the higher temperatures without damage.

The terminology used herein is for the purpose of description, not limitation. Specific structural and functional details disclosed herein are not to be interpreted as limiting, but merely as basis for teaching one skilled in the art to employ the present invention. Those skilled in the art will also recognize the equivalents that may be substituted for elements described with reference to the exemplary embodiments disclosed herein without departing from the scope of the present invention.

While the present invention has been particularly shown and described with reference to the exemplary embodiments as illustrated in the drawing, it will be recognized by those skilled in the art that various modifications may be made without departing from the scope of the invention. Therefore, it is intended that the present disclosure not be limited to the particular embodiment(s) disclosed as, but that the disclosure will include all embodiments falling within the scope of the appended claims.

## Claims

1. A transport refrigeration system (20) for controlling temperature within a cargo box during transit, the transport refrigeration system (20) comprising:
a refrigerant vapor compression unit having a refrigerant compression device (32) with a compressor motor (68), a refrigerant heat rejection heat exchanger (34) and a refrigerant heat absorption heat exchanger (38) arranged in a refrigerant flow circuit according to a refrigeration cycle;
at least one fan (40) associated with the refrigerant heat rejection heat exchanger (34) and a fan motor (42) configured to drive the fan (40);
at least one fan (44) associated with the refrigerant heat absorption heat exchanger (38) and a fan motor (46) configured to drive the fan (44);
an electric resistance heater (48) associated with the refrigerant heat absorption heat exchanger (38); and **characterized by** a power supply system (24) including a fossil-fueled engine (26), an electric generator (66) driven by the fossil-fueled engine (26) and a thermoelectric generator (30) operatively disposed in an exhaust gas flow from said engine, said thermoelectric generator (30) operative to convert heat from the engine exhaust gas flow into electric current; and
a storage battery (28) comprising a low voltage pack and a high voltage pack;
a controller (70) configured to supply electric power from the electric generator (66) to the compressor motor (68), to the fan motors (42, 46) and/or to the electric resistance heater (48), when the fossil-fueled engine (26) is operating; and to supply electric power from the high voltage pack of the storage battery (28) to the fan motors (42, 46) and the electric resistance heater (48) and to supply electric power to the controller (70) from the low voltage pack of the storage battery (28), when the fossil-fueled engine (26) is not operating.

2. The transport refrigeration system (20) as recited in claim 1 wherein the fossil-fueled engine (26) comprises a diesel engine.

3. The transport refrigeration system (20) as recited in claim 2 for controlling temperature within the cargo box of a refrigerated trailer unit.

4. The transport refrigeration system (20) as recited in claim 1 further comprising a particulate filter (64) disposed in the engine exhaust gas flow for removing particulate material from the engine exhaust gas flow before the engine exhaust gas flow vents to the atmosphere.

5. The transport refrigeration system (20) as recited in claim 4 wherein the particulate filter (64) is disposed in the engine exhaust gas flow upstream of the thermoelectric generator (30).

6. The transport refrigeration system (20) as recited in claim 4 wherein the particulate filter (64) is disposed in the engine exhaust gas flow downstream of the thermoelectric generator (30).

7. The transport refrigeration system (20) as recited in claim 1 wherein the fossil-fueled engine (26) drives the refrigerant compression device (32) through a mechanical coupling.

8. The transport refrigeration system (20) as recited in claim 7 wherein the fossil-fueled engine (26) drives the refrigerant compression device (32) through a direct shaft to shaft mechanical coupling.

9. The transport refrigeration system (20) as recited in claim 7 wherein the fossil-fueled engine (26) drives the refrigerant compression device (32) through a belt drive.

10. The transport refrigeration system as recited in claim 1 wherein the fossil-fueled engine (26) drives an electric generator (66) for generating electric current to power a compression device motor for driving the refrigerant compression device (32).

11. The transport refrigeration system as recited in claim 10 wherein the fossil-fueled engine (26) drives the electric generator (66) for generating electric current to power at least one fan motor (42) for driving a fan (40) associated with the refrigerant heat rejection heat exchanger (34) and to power at least one fan motor (46) for driving a fan (44) associated with the refrigerant heat absorption heat exchanger (34).

12. A method for augmenting power generation of a power supply system (24) of a transport refrigeration system (20) for controlling temperature within a cargo box during transit, the power supply system (24) including a fossil-fueled engine (26), the method comprising:
disposing a thermoelectric generator (30) in an exhaust gas flow from said engine, said thermoelectric generator (30) operative to convert heat from the exhaust gas flow into electric current;
supplying the electric current generated by said thermoelectric generator (30) to a storage battery (28) comprising a low voltage pack and a high voltage pack, and associated with the power supply system (24);
using a controller (70) to supply electric power from an electric generator (66) to a compressor motor (68), to fan motors (42, 46) and/or to an electric resistance heater (48), when the fossil-fueled engine (26) is operating and to supply electric power from the high voltage pack of the storage battery (28) to the fan motors (42, 46) and the electric resistance heater (48) and to supply electric power to the controller (70) from the low voltage pack of the storage battery (28), when the fossil-fueled engine (26) is not operating.

## Patentansprüche

1. Transportkühlsystem (20) zum Steuern einer Temperatur in einem Frachtbehälter während des Transports, wobei das Transportkühlsystem (20) Folgendes umfasst:
eine Kältemitteldampf-Vedichtungseinheit, die eine Kältemittelverdichtungseinrichtung (32) mit einem Vedichtermotor (68), einen Kältemittel-Wärmeabgabewärmetauscher (34) und einen Kältemittel-Wärmeabsorptionswärmetauscher (38) aufweist, die in einem Kältemittelkreislauf gemäß einem Kühlzyklus angeordnet sind;
mindestens einen Ventilator (40), der mit dem Kältemittel-Wärmeabgabewärmetauscher (34) und einem Ventilatormotor (42) assoziiert ist, der konfiguriert ist, um den Ventilator (40) anzutreiben;
mindestens einen Ventilator (44), der mit dem Kältemittel-Wärmeabsorptionswärmetauscher (38) und einem Ventilatormotor (46) assoziiert ist, der konfiguriert ist, um den Ventilator (44) anzutreiben;
ein elektrisches Widerstandsheizelement (48), das mit dem Kältemittel-Wärmeabsorptionswärmetauscher (38) assoziiert ist; und
**gekennzeichnet durch**
ein Stromversorgungssystem (24), einschließend einen mit fossilen Brennstoffen angetriebenen Verbrennungsmotor (26), einen elektrischen Generator (66), der von dem mit fossilen Brennstoffen angetriebenen Verbrennungsmotor (26) angetrieben wird und einen thermoelektrischen Generator (30), der operativ in einem Abgasstrom von dem Verbrennungsmotor angeordnet ist, wobei der thermoelektrische Generator (30) operativ ist, um Wärme aus dem Abgasstrom des Verbrennungsmotors in elektrischen Strom umzuwandeln; und
eine Speicherbatterie (28), umfassend einen Niederspannungspack und einen Hochspannungspack;
eine Steuerung (70), die konfiguriert ist, um elektrischen Strom von dem elektrischen Generator (66) dem Verdichtermotor (68), den Ventilatormotoren (42, 46) und/oder dem elektrischen Widerstandsheizelement (48) zuzuführen, wenn der mit fossilen Brennstoffen angetriebene Verbrennungsmotor (26) betrieben wird; und um elektrischen Strom von dem Hochspannungspack der Speicherbatterie (28) den Ventilatormotoren (42, 46) und dem elektrischen Widerstandsheizelement (48) zuzuführen und um elektrischen Strom der Steuerung (70) von dem Niederspannungspack der Speicherbatterie (28) zuzuführen, wenn der mit fossilen Brennstoffen angetriebene Verbrennungsmotor (26) nicht betrieben wird.

2. Transportkühlsystem (20) nach Anspruch 1, wobei der mit fossilen Brennstoffen angetriebene Verbrennungsmotor (26) einen Dieselmotor umfasst.

3. Transportkühlsystem (20) nach Anspruch 2 zum Steuern der Temperatur in dem Frachtbehälter einer gekühlten Anhängereinheit.

4. Transportkühlsystem (20) nach Anspruch 1, ferner umfassend einen Partikelfilter (64), der in dem Abgasstrom des Verbrennungsmotors zum Entfernen von Partikelmaterial aus dem Abgasstrom des Verbrennungsmotors angeordnet ist, bevor der Abgasstrom des Verbrennungsmotors in die Atmosphäre entlassen wird.

5. Transportkühlsystem (20) nach Anspruch 4, wobei der Partikelfilter (64) in dem Abgasstrom des Verbrennungsmotors stromaufwärts des thermoelektrischen Generators (30) angeordnet ist.

6. Transportkühlsystem (20) nach Anspruch 4, wobei der Partikelfilter (64) in dem Abgasstrom des Verbrennungsmotors stromabwärts des thermoelektrischen Generators (30) angeordnet ist.

7. Transportkühlsystem (20) nach Anspruch 1, wobei der mit fossilen Brennstoffen angetriebene Verbrennungsmotor (26) die Kältemittelverdichtungseinrichtung (32) durch eine mechanische Kopplung antreibt.

8. Transportkühlsystem (20) nach Anspruch 7, wobei der mit fossilen Brennstoffen angetriebene Verbrennungsmotor (26) die Kältemittelverdichtungseinrichtung (32) durch eine direkte mechanische Welle-zu-Welle-Kopplung antreibt.

9. Transportkühlsystem (20) nach Anspruch 7, wobei der mit fossilen Brennstoffen angetriebene Verbrennungsmotor (26) die Kältemittelverdichtungseinrichtung (32) durch einen Riemenantrieb antreibt.

10. Transportkühlsystem nach Anspruch 1, wobei der mit fossilen Brennstoffen angetriebene Verbrennungsmotor (26) einen elektrischen Generator (66) zum Erzeugen eines elektrischen Stroms antreibt, um den Motor einer Verdichtungseinrichtung mit Strom zu versorgen, um die Kältemittelverdichtungseinrichtung (32) anzutreiben.

11. Transportkühlsystem nach Anspruch 10, wobei der mit fossilen Brennstoffen angetriebene Verbrennungsmotor (26) den elektrischen Generator (66) zum Erzeugen eines elektrischen Stroms antreibt, um mindestens einen Ventilatormotor (42) zum Antreiben eines Ventilators (40) mit Strom zu versorgen, der mit dem Kältemittel-Wärmeabgabewärmetauscher (34) assoziiert ist und um mindestens einen Ventilatormotor (46) zum Antreiben eines Ventilators (44) mit Strom zu versorgen, der mit dem Kältemittel-Wärmeabsorptionswärmetauscher (34) assoziiert ist.

12. Verfahren zum Steigern der Stromerzeugung eines Stromversorgungssystems (24) eines Transportkühlsystems (20) zum Steuern einer Temperatur in einem Frachtbehälter während des Transports, wobei das Stromversorgungssystem (24) einen mit fossilen Brennstoffen angetriebenen Verbrennungsmotor (26) einschließt, wobei das Verfahren Folgendes umfasst:
Anordnen eines thermoelektrischen Generators (30) in einem Abgasstrom von dem Verbrennungsmotor, wobei der thermoelektrische Generator (30) operativ ist, um Wärme aus dem Abgasstrom in einen elektrischen Strom umzuwandeln;
Zuführen des elektrischen Stroms, der von dem thermoelektrischen Generator (30) generiert wird, zu einer Speicherbatterie (28), umfassend einen Niederspannungspack und einen Hochspannungspack, und assoziiert mit dem Stromversorgungssystem (24);
Verwenden einer Steuerung (70), um elektrischen Strom von einem elektrischen Generator (66) einem Verdichtermotor (68), Ventilatormotoren (42, 46) und/oder einem elektrischen Widerstandsheizelement (48) zuzuführen, wenn der mit fossilen Brennstoffen angetriebene Verbrennungsmotor (26) betrieben wird, und um elektrischen Strom von dem Hochspannungspack der Speicherbatterie (28) den Ventilatormotoren (42, 46) und dem elektrischen Widerstandsheizelement (48) zuzuführen und um elektrischen Strom der Steuerung (70) von dem Niederspannungspack der Speicherbatterie (28) zuzuführen, wenn der mit fossilen Brennstoffen angetriebene Verbrennungsmotor (26) nicht betrieben wird.

## Revendications

1. Système de réfrigération de transport (20) pour réguler une température à l'intérieur d'un caisson de chargement pendant un transit, le système de réfrigération de transport (20) comprenant :
une unité de compression de vapeur de réfrigérant comprenant un dispositif de compression de réfrigérant (32) comportant un moteur de compresseur (68), un échangeur de chaleur à rejet de chaleur de réfrigérant (34) et un échangeur de chaleur à absorption de chaleur de réfrigérant (38) agencés dans un circuit de flux de réfrigérant selon un cycle de réfrigération ;
au moins un ventilateur (40) associé à l'échangeur de chaleur à rejet de chaleur de réfrigérant (34) et un moteur de ventilateur (42) configuré pour entraîner le ventilateur (40) ;
au moins un ventilateur (44) associé à l'échangeur de chaleur à absorption de chaleur de réfrigérant (38) et un moteur de ventilateur (46) configuré pour entraîner le ventilateur (44) ;
un générateur de chaleur à résistances électriques (48) associé à l'échangeur de chaleur à absorption de chaleur de réfrigérant (38) ; et
**caractérisé par**
un système d'alimentation (24) comprenant un moteur à combustible fossile (26), un générateur électrique (66) entraîné par le moteur à combustible fossile (26) et un générateur thermoélectrique (30) fonctionnellement disposé dans un flux de gaz d'échappement provenant dudit moteur, ledit générateur thermoélectrique (30) permettant de convertir de la chaleur provenant du flux de gaz d'échappement de moteur en courant électrique ; et
une batterie à accumulateurs (28) comprenant un bloc basse tension et un bloc haute tension ;
un dispositif de commande (70) configuré pour fournir de l'énergie électrique provenant du générateur électrique (66) au moteur de compresseur (68), aux moteurs de ventilateur (42, 46) et/ou au générateur de chaleur à résistances électriques (48), lorsque le moteur à combustible fossile (26) fonctionne ; et pour fournir de l'énergie électrique provenant du bloc haute tension de la batterie à accumulateurs (28) aux moteurs de ventilateur (42, 46) et au générateur de chaleur à résistances électriques (48) et pour fournir de l'énergie électrique au dispositif de commande (70) à partir du bloc basse tension de la batterie à accumulateurs (28), lorsque le moteur à combustible fossile (26) ne fonctionne pas.

2. Système de réfrigération de transport (20) selon la revendication 1 dans lequel le moteur à combustible fossile (26) comprend un moteur diesel.

3. Système de réfrigération de transport (20) selon la revendication 2 pour réguler une température à l'intérieur du caisson de chargement d'une unité de remorque réfrigérée.

4. Système de réfrigération de transport (20) selon la revendication 1 comprenant en outre un filtre à particules (64) disposé dans le flux de gaz d'échappement de moteur pour retirer une matière particulaire du flux de gaz d'échappement. de moteur avant que le flux de gaz d'échappement de moteur ne s'échappe dans l'atmosphère.

5. Système de réfrigération de transport (20) selon la revendication 4 dans lequel le filtre à particules (64) est disposé dans le flux de gaz d'échappement de moteur en amont du générateur thermoélectrique (30).

6. Système de réfrigération de transport (20) selon la revendication 4 dans lequel le filtre à particules (64) est disposé dans le flux de gaz d'échappement de moteur en aval du générateur thermoélectrique (30).

7. Système de réfrigération de transport (20) selon la revendication 1 dans lequel le moteur à combustible fossile (26) entraîne le dispositif de compression de réfrigérant (32) par le biais d'un accouplement mécanique.

8. Système de réfrigération de transport (20) selon la revendication 7 dans lequel le moteur à combustible fossile (26) entraîne le dispositif de compression de réfrigérant (32) par le biais d'un accouplement mécanique direct arbre à arbre.

9. Système de réfrigération de transport (20) selon la revendication 7 dans lequel le moteur à combustible fossile (26) entraîne le dispositif de compression de réfrigérant (32) par le biais d'un entraînement par courroie.

10. Système de réfrigération de transport selon la revendication 1 dans lequel le moteur à combustible fossile (26) entraîne un générateur électrique (66) pour générer un courant électrique pour alimenter un moteur de dispositif de compression pour entraîner le dispositif de compression de réfrigérant (32).

11. Système de réfrigération de transport selon la revendication 10 dans lequel le moteur à combustible fossile (26) entraîne le générateur électrique (66) pour générer un courant électrique pour alimenter au moins un moteur de ventilateur (42) pour entraîner un ventilateur (40) associé à l'échangeur de chaleur à rejet de chaleur de réfrigérant (34) et pour alimenter au moins un moteur de ventilateur (46) pour entraîner un ventilateur (44) associé à l'échangeur de chaleur à absorption de chaleur de réfrigérant (34).

12. Procédé pour augmenter une génération d'énergie d'un système d'alimentation (24) d'un système de réfrigération de transport (20) pour réguler une température à l'intérieur d'un caisson de chargement pendant un transit, le système d'alimentation (24) comprenant un moteur à combustible fossile (26), le procédé comprenant :
la disposition d'un générateur thermoélectrique (30) dans un flux de gaz d'échappement provenant dudit moteur, ledit générateur thermoélectrique (30) permettant de convertir de la chaleur provenant du flux de gaz d'échappement en courant électrique ;
la fourniture du courant électrique généré par ledit générateur thermoélectrique (30) à une batterie à accumulateurs (28) comprenant un bloc basse tension et un bloc haute tension, et associé au système d'alimentation (24) ;
l'utilisation d'un dispositif de commande (70) pour fournir de l'énergie électrique provenant d'un générateur électrique (66) à un moteur de compresseur (68), à des moteurs de ventilateur (42, 46) et/ou à un générateur de chaleur à résistances électriques (48), lorsque le moteur à combustible fossile (26) fonctionne et pour fournir de l'énergie électrique provenant du bloc basse tension de la batterie à accumulateurs (28) aux moteurs de ventilateur (42, 46) et au générateur de chaleur à résistances électriques (48) et pour fournir de l'énergie électrique au dispositif de commande (70) à partir du bloc basse tension de la batterie à accumulateurs (28), lorsque le moteur à combustible fossile (26) ne fonctionne pas.
